(19) Europäisches Patentamt
European Patent Office
Office européen des brevets

(11) **EP 3 136 340 A1**

(12) **EUROPEAN PATENT APPLICATION**

(43) Date of publication:
01.03.2017 Bulletin 2017/09

(51) Int Cl.:
*G06T 7/00* (2017.01)

(21) Application number: 15306317.7

(22) Date of filing: 27.08.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• Sorgi, Lorenzo
30655 Hannover (DE)
• Xu, He
27299 Langwedel (DE)

(74) Representative: Huchet, Anne et al
TECHNICOLOR
1-5, rue Jeanne d'Arc
92130 Issy-les-Moulineaux (FR)

(54) **METHOD FOR ESTIMATING A UNIFIED PROJECTION MODEL FOR A CAMERA AND APPARATUS PERFORMING THE SAME**

(57) A method for estimating a unified projection model for a camera and an apparatus performing the method are provided. An image captured by the camera is received. A non-metric calibration object is captured in the image. A plurality of feature points associated to the non-metric calibration object on the image is extracted. A camera parameters vector is extracted using the plurality of feature points. An objective function of the camera parameters vector is defined. The unified projection model of the camera is then estimated using the camera parameters vector and the objective function.

Fig. 1

**Description**

**TECHNICAL FIELD**

A method and an apparatus for estimation of a unified projection model for a camera are proposed, in particular, in the technical field denoted as camera calibration. The technical field of camera calibration collects algorithms and technologies aimed at the characterization of a mathematical model for the description of the image formation process of a camera or a multi-camera system. In addition, a computer readable medium suitable for such a method and an apparatus is also proposed.

**BACKGROUND**

A great majority of the camera calibration methods proposed in literature and available on the market aims at the estimation of a pinhole model for a camera or a camera set, which can be normally described as pinhole cameras. The pinhole model defines the geometric relationship between a 3D point and its 2D corresponding projection onto the camera image plane, where the geometric mapping is generally called a perspective projection. However, there are projection systems whose geometry cannot be described with the conventional pinhole model because of high distortion introduced by the imaging device.

Several alternative projection models have been proposed in the field, among which the unified projection model is introduced for central catadioptric cameras [I]. ([I] is one of references [I] through [VII] included in this specification and listed in a "Reference" section provided at the end of this specification.) It has been shown that all central catadioptric systems are isomorphic to projective mappings from a virtual unitary sphere to an image plane with a projection center perpendicular to the plane. Using this principle, different camera models such as the stereographic projection and the central planar projection can be unified under one theory. The unified projection model is further justified to be also valid for fisheye and spherical cameras [II].

Some calibration techniques have been proposed for these unified projection models, which require the exploitation of a planar grids and the knowledge of its geometry, and therefore, are generally denoted as metric calibration. However, this approach might not be practical for some cameras or imaging systems.

Instead of metric calibration, a different class of techniques denoted as non-metric calibration is proposed in order to infer objective camera models without knowledge of the exact geometry of the calibration object, but rather with only the topology of the calibration object. A non-metric camera calibration method has been proposed for fisheye lens cameras [III], utilizing a calibration object comprised of two bundles of parallel lines, which is used for modelling the collinearity, parallelism and orthogonality constraints in the camera space [IV]. The generated objective function is minimized by means of eigenvalue minimization, which is an optimized technique using Perturbation analysis [V].

**SUMMARY**

The non-metric approach for camera calibration can be applied to camera models other than fisheye lens cameras, given that an appropriate imaging geometry is analyzed together with the corresponding set of characterizing parameters and that an appropriate cost function is defined. Using non-metric calibration, the problem to estimate camera models can be formulated in a way that only the parameters of a specific camera model are included in the objective function, and thus can reduce most of the dimensionality of the estimation space. In addition, the general non-metric calibration framework is highly flexible and thus applicable for various camera projection models.

Therefore, it is an object to extend the non-metric calibration framework for the estimation of a camera model valid for all single-viewpoint imaging systems. The proposed non-metric calibration technique for the estimation of a unified projection model is based on the minimization of an objective function build using collinearity, parallelism and orthogonality constraints. The later can be optionally induced on a camera space using an ad-hoc color-coded calibration pattern, for example, as introduced in European Patent Application EP15150966.8 applied by the same inventor.

According to one embodiment, a camera calibration method for a multi-camera system is proposed. The method comprises: receiving an image captured by the camera, a non-metric calibration object being captured in the image; extracting a plurality of feature points associated to the non-metric calibration object on the image; extracting a camera parameters vector using the plurality of feature points; defining an objective function of the camera parameters vector; and estimating a unified projection model of the camera using the camera parameters vector and the objective function.

In one embodiment, the camera parameters vector is represented by at least a part of: coordinates of the principle points which is the intersection of the optical axis with the retinal plane $(u_0, v_0)$, camera focal lengths $(\gamma_1, \gamma_2)$, a corresponding lifting parameter $(\xi)$, and n distortion parameters $\theta_{i, i=0,...,N-1}$ where N can be arbitrarily defined by the user.

In one embodiment, estimating the unified projection model of the camera includes calculating a minimization of a Jacobian matrix of the objective function. Preferably, the minimization of the Jacobian matrix of the camera parameters vector is calculated using Eigenvalue Minimization.

In one embodiment, the non-metric calibration object is one of stripe pattern and color-coded calibration object.

According to one embodiment, an apparatus for estimating a unified projection model for a camera is introduced, which comprises a reception unit and an operation unit. The reception unit is configured to receive an image captured by the camera. A non-metric calibration object is captured in the image. The operation unit is configured to extract a plurality of feature points associated to the non-metric calibration object on the image, to extract a camera parameters vector using the plurality of feature points, to define an objective function of the camera parameters vector, and to estimate a unified projection model of the camera using the camera parameters vector and the objective function.

In one embodiment, the operation unit estimates the unified projection model of the camera by calculating a minimization of a Jacobian matrix of the objective function.

Also, a computer readable storage medium has stored therein instructions for estimating a unified projection model for a camera, which, when executed by a computer, causes the computer to: receive an image captured by the camera, a non-metric calibration object being captured in the image; extract a plurality of feature points associated to the non-metric calibration object on the image; extract a camera parameters vector using the plurality of feature points; define an objective function of the camera parameters vector; and estimate a unified projection model of the camera using the camera parameters vector and the objective function.

The computer readable storage medium can be a non-transitory volatile or non-volatile storage medium, such as, for example, a hard disk, an optical or magnetic disk or tape, a solid state memory device, etc. The storage medium thus tangibly embodies a program of instructions executable by a computer or a processing device to perform program operations as described herein.

Using the proposed non-metric calibration techniques, no metric information about the reference pattern or the camera position is required. Separate stripe patterns can be displayed on a video screen to generate a virtual grid, and it is not necessary to specify to where each edge point corresponds to the reference strip patterns. These eliminate the grid point extraction processing and thus make the calibration process easier and more efficient.

The proposed calibration process is formulated as a minimization problem of an objective function defined over the space of the unified model parameters. Therefore, this calibration technique can be conveniently applied to all central catadioptric systems with different projection models such as parabola, hyperbola, folded mirror, ellipse, planar, fisheye, and spherical models, among others.

## BRIEF DESCRIPTION OF THE DRAWINGS

For a better understanding of the present principles, the proposed solutions shall now be explained in more detail in the following description with reference to the figures. It is understood that the solutions are not limited to the disclosed exemplary embodiments and that specified features can also expediently be combined and/or modified without departing from the scope of the proposed solutions as defined in the appended claims and exhibited in the figures, which are introduced as follows:

Fig. 1    is a flow chart illustrating one embodiment of a method for estimating a unified projection model for a camera;

Fig. 2    schematically illustrates an exemplary unified projection model for a camera;

Fig. 3    illustrates the evaluations and the estimated errors for one embodiment of a non-metric calibration method for estimating a unified projection model for a camera and a conventional metric calibration method; and

Fig. 4    is a schematic diagram illustrating an embodiment of an apparatus configured to perform the embodiments of a method for estimating a unified projection model for a camera.

## DETAILED DESCRIPTION OF PREFERRED EMBODIMENTS

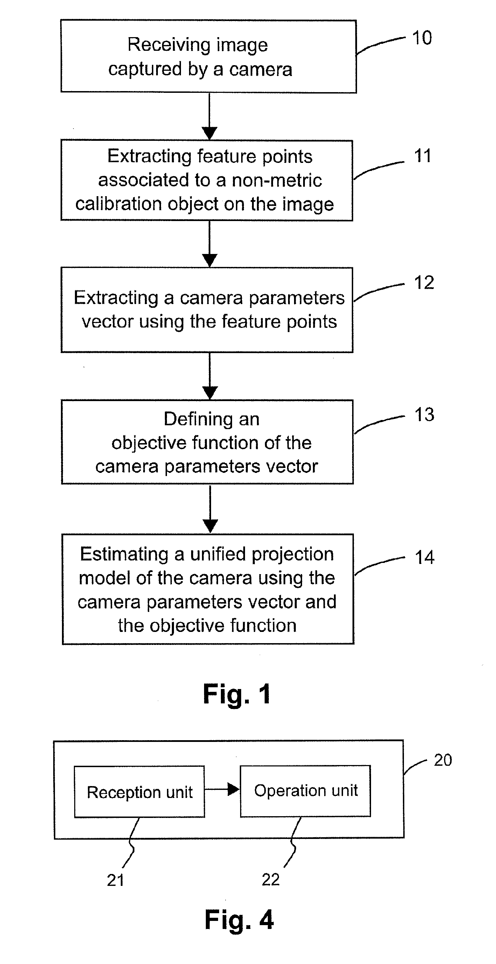

Referring to Fig. 1, an embodiment of the method for estimating a unified projection model for a camera comprises receiving 10 an image captured by the camera. A non-metric calibration object is captured in the image. The camera can be any kind of single viewpoint imaging system, preferably, a central catadioptric camera, and is suitable to be calibrated for a unified projection model. The non-metric calibration object is preferably one of strip pattern and color-coded calibration object, for example, as introduced in European Patent Application EP15150966.8 applied by the same inventor.

The embodiment of the method further comprises: extracting 11 a plurality of feature points associated to the non-metric calibration object on the image; extracting 12 a camera parameters vector using the plurality of feature points; defining 13 an objective function of the camera parameters vector; and estimating 14 a unified projection model of the camera using the camera parameters vector and the objective function.

In the case when the non-metric calibration object is a stripe pattern or the color-coded calibration object as introduced in European Patent Application EP15150966.8, the above feature points are preferably the points on the edge of the stripe pattern or the color-coded calibration object.

In the following one embodiment of a method for estimating a unified projection model for a camera will be described and explained in detail. It should be noted that, when repeated and detailed descriptions of well-known functions or configurations can obscure the gist of the present approach, the detailed description will be omitted.

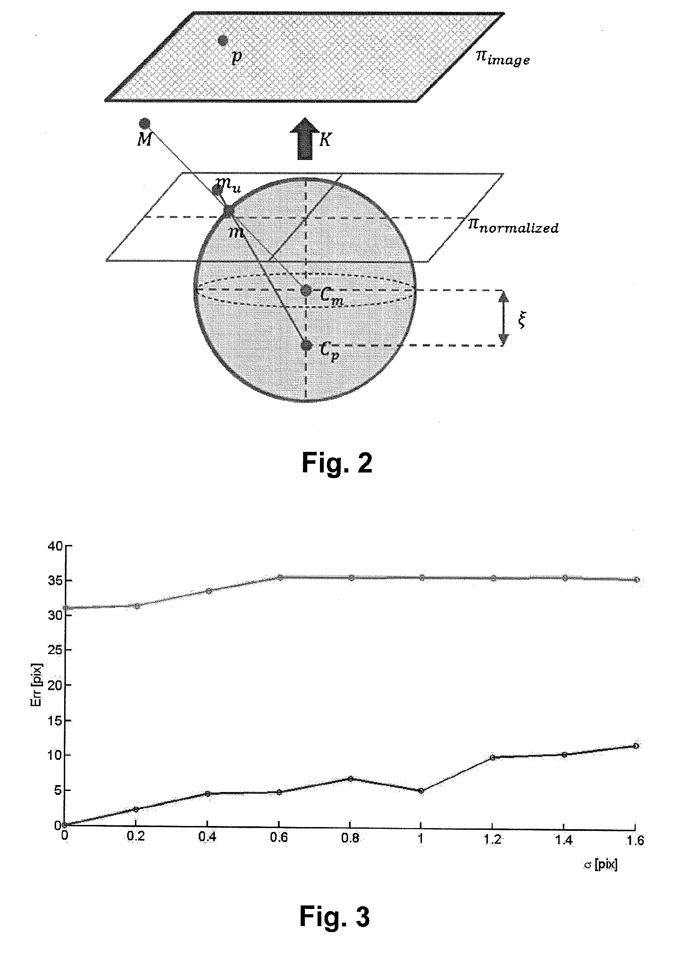

Fig. 2 schematically illustrates the fundamental ideas to estimate a unified projection model for a camera in the embodiment of the proposed method. It shows that the projection from a 3D world onto a retinal plane of a camera, which can be realized by any single viewpoint imaging system, can be described by the unified projection model.

First a 3D point $M$ expressed in the camera system is projected onto a unit sphere on the point $m$, which identifies the 3D ray in the camera system associated with a pixel in the retinal plane. $m$ can also be denoted as an incident vector per equation (1).

$$m = \frac{M}{\|M\|} = \begin{bmatrix} x_m & y_m & z_m \end{bmatrix}. \qquad (1)$$

The incident vector is translated along the Z-axis in a new reference frame per equation (2), which is generally denoted as lifting.

$$m_l = \begin{bmatrix} x_m & y_m & (z_m + \xi) \end{bmatrix} \qquad (2)$$

where $\xi$ is the corresponding lifting parameter.

The point $m_l$ is then projected on a normalized plane and placed at a unit distance from the origin, which is generally denoted as homogenous normalization in equation (3).

$$m_u = \frac{m_l}{z_m + \xi} = \begin{bmatrix} \frac{x_m}{z_m + \xi} & \frac{y_m}{z_m + \xi} & 1 \end{bmatrix} = \begin{bmatrix} x_u & y_u & 1 \end{bmatrix} \qquad (3)$$

A non-linearity is introduced in order to model the non-ideal behaviors of the camera lens and the distortion induced by the misalignment between the mirror and the camera per equation (4).

$$m_d = m_u * \mathcal{L}(\rho_u, \theta_d) = \begin{bmatrix} x_d & y_d & 1 \end{bmatrix} \qquad (4)$$

where $\mathcal{L}(\rho_u, \theta_d)$ is the selected non-linearity, $\theta$ is the corresponding vector of distortion parameters, and $\rho = \sqrt{x_u{}^2 + y_u{}^2}$ is the distance of the normalized point from the distortion center. Applying the widely used Brown distortion model [VI] in this embodiment without the tangential component, one can obtain the following in equation (5):

$$\mathcal{L}(\rho_u, \ \theta_d) = 1 + \sum_J k_j \rho^{2j} . \qquad (5)$$

A general pinhole perspective projection onto a retinal plane of a camera can be given by

$$p = K \cdot m_d, \qquad (6)$$

where $K = \begin{bmatrix} \gamma_1 & 0 & u_0 \\ 0 & \gamma_2 & v_0 \\ 0 & 0 & 1 \end{bmatrix}$ is an upper triangular camera projection matrix, where $u_0$ and $v_0$ are the coordinates of the principle points, which is the intersection of the optical axis with the retinal plane, and $\gamma_1$ and $\gamma_2$ are the camera

focal lengths.

In order to conduct the characterization of a camera model within a non-metric calibration framework, the approach in [III] is applied here and the derivatives of the incident vector with respect to the model parameters are extracted. The camera parameters vector can be denoted as

$\varphi = [u_0\ v_0\ \gamma_1\ \gamma_2\ \xi\ \theta_d]$ accordingly.

From equations (1) to (3), the relation between $m$ and $m_u$ can be derived as:

$$m = \begin{bmatrix} \dfrac{\xi + \sqrt{1 + (1 - \xi^2)(x_u{}^2 + y_u{}^2)}}{x_u{}^2 + y_u{}^2 + 1} x_u \\[2ex] \dfrac{\xi + \sqrt{1 + (1 - \xi^2)(x_u{}^2 + y_u{}^2)}}{x_u{}^2 + y_u{}^2 + 1} y_u \\[2ex] \dfrac{\xi + \sqrt{1 + (1 - \xi^2)(x_u{}^2 + y_u{}^2)}}{x_u{}^2 + y_u{}^2 + 1} - \xi \end{bmatrix}.$$

Differentiating the above equation with respect to the model parameters yields equation (7) as follows:

$$\frac{\partial m}{\partial \xi} = \begin{bmatrix} -\dfrac{x_u \sigma}{x_u{}^2 + y_u{}^2 + 1} \\[2ex] -\dfrac{y_u \sigma}{x_u{}^2 + y_u{}^2 + 1} \\[2ex] -\dfrac{\sigma}{x_u{}^2 + y_u{}^2 + 1} - 1 \end{bmatrix}, \qquad (7)$$

where $\sigma = \dfrac{2\xi(x_u{}^2 + y_u{}^2)}{2\sqrt{-\xi x_u{}^2 - \xi y_u{}^2 + x_u{}^2 + y_u{}^2 + 1}} - 1$ and $\dfrac{\partial m}{\partial \varphi_i}$ is expressed in equation 8.

$$\frac{\partial m}{\partial \varphi_i} =$$

$$\begin{bmatrix} \left(\xi + \sqrt{1 + (1 - \xi^2)(x_u{}^2 + y_u{}^2)}\right) - \left(\dfrac{\frac{\partial x_u}{\partial \varphi_i}}{x_u{}^2 + y_u{}^2 + 1} - \dfrac{2\left(x_u \frac{\partial x_u}{\partial \varphi_i} + y_u \frac{\partial y_u}{\partial \varphi_i}\right)x_u}{(x_u{}^2 + y_u{}^2 + 1)^2}\right) - \dfrac{(\xi^2 - 1)\left(x_u \frac{\partial x_u}{\partial \varphi_i} + y_u \frac{\partial y_u}{\partial \varphi_i}\right)x_u}{(x_u{}^2 + y_u{}^2 + 1)\sqrt{1 + (1 - \xi^2)(x_u{}^2 + y_u{}^2)}} \\[3ex] \left(\xi + \sqrt{1 + (1 - \xi^2)(x_u{}^2 + y_u{}^2)}\right) - \left(\dfrac{\frac{\partial y_u}{\partial \varphi_i}}{x_u{}^2 + y_u{}^2 + 1} - \dfrac{2\left(x_u \frac{\partial x_u}{\partial \varphi_i} + y_u \frac{\partial y_u}{\partial \varphi_i}\right)y_u}{(x_u{}^2 + y_u{}^2 + 1)^2}\right) - \dfrac{(\xi^2 - 1)\left(x_u \frac{\partial x_u}{\partial \varphi_i} + y_u \frac{\partial y_u}{\partial \varphi_i}\right)y_u}{(x_u{}^2 + y_u{}^2 + 1)\sqrt{1 + (1 - \xi^2)(x_u{}^2 + y_u{}^2)}} \\[3ex] \dfrac{\left(x_u \frac{\partial x_u}{\partial \varphi_i} + y_u \frac{\partial y_u}{\partial \varphi_i}\right)\left(2\xi\sqrt{1 + (1 - \xi^2)(x_u{}^2 + y_u{}^2)} + (1 - \xi^2)(x_u{}^2 + y_u{}^2) + \xi^2 + 1\right)}{(x_u{}^2 + y_u{}^2 + 1)^2\sqrt{1 + (1 - \xi^2)(x_u{}^2 + y_u{}^2)}} \end{bmatrix}$$

$$(8)$$

Here, $\varphi_i$ represents $u_0$, $v_0$, $\gamma_1$, $\gamma_2$, $k_1$, $k_2$, $k_3$, ....

By differentiating equations (4), one can obtain the equations pair (9),

$$\frac{\partial x_u}{\partial \varphi_i} = \mathcal{L}(\rho)\frac{\partial x_d}{\partial \varphi_i} + x_d\frac{\partial \mathcal{L}(\rho)}{\partial \varphi_i}$$
$$\frac{\partial y_u}{\partial \varphi_i} = \mathcal{L}(\rho)\frac{\partial y_d}{\partial \varphi_i} + y_d\frac{\partial \mathcal{L}(\rho)}{\partial \varphi_i}, \qquad (9)$$

where $\dfrac{\partial \mathcal{L}(\rho)}{\partial \varphi_i}$ can be easily derived from equation (5), and $\dfrac{\partial x_u}{\partial \varphi_i}$ and $\dfrac{\partial y_u}{\partial \varphi_i}$ can be calculated from equation (6) for

any $\varphi_i$. By composing them with the partial derivatives expressed in equations (7)-(9), the Jacobian matrix of the incident vector derivatives with respect to all model parameters $\varphi_i$ can be obtained in equation (10):

$$J_m = \begin{bmatrix} \dfrac{\partial m}{\partial \xi} & \dfrac{\partial m}{\partial \gamma_1} & \dfrac{\partial m}{\partial \gamma_2} & \dfrac{\partial m}{\partial u_0} & \dfrac{\partial m}{\partial v_0} & \dfrac{\partial m}{\partial k_1} & \dfrac{\partial m}{\partial k_2} & \dfrac{\partial m}{\partial k_3} & \cdots \end{bmatrix} . \qquad (10)$$

Once the Jacobian matrix of the camera parameters vector is extracted, it can be integrated within the non-metric calibration frame work as introduced in [III]. A similar objective function derived from the enforcement of the collinearity, parallelism and orthogonality constraints is defined and minimized with respect to the camera parameters by means of Eigenvalue Minimization.

Accordingly, referring to [III], the objective function is defined as

$$J = \frac{J_1}{\gamma_1} + \frac{J_2}{\gamma_2} + \frac{J_3}{\gamma_3} ,$$

where

$$J_1 = \sum_{all\ \kappa} \lambda_{min}^{(\kappa)} ,$$

$$J_2 = \sum_{all\ \mathcal{G}} \mu_{min}^{(\mathcal{G})} ,$$

and

$$J_3 = \sum_{all\ orthogonal\ pairs\ \{\mathcal{G}_\mathcal{G}, \mathcal{G}'_\mathcal{G}\}} (I_\mathcal{G}, I_{\mathcal{G}'})^2$$

are the error terms derived by enforcement of the collinearity, parallelism and orthogonality constraint, respectively, and $\gamma_i$, $i$ = 1, 2, 3 are the weights to balance the magnitudes of the three terms. In this embodiment, the minimization by Levenberg-Marquardt takes use of the above $J_1$ and $J_2$, and expresses them as the terms in equation (10).

## Evaluation

The proposed non-metric calibration method for estimating a unified projection model for a camera is tested against a metric calibration technique as introduced in [II]. The techniques in [II] are publicly available particularly as part of the online Omnidirectional calibration toolbox [VII].

A visual scene is defined with a calibration checkerboard comprised of $9 \times 11$ grid points, and a virtual camera is defined according to the proposed unified projection model. The acquisition of a calibration dataset is simulated by analytical projection of the grid on ten calibration views under different orientations. The image projections are then corrupted with a progressive white Gaussian noise with standard deviation ranging in the interval of [0-1.6] pixels. The same dataset comprised of the noisy grid point projection is used to run the metric and the non-metric calibration. In the case of non-metric calibration, the dataset are grouped into bundles of parallel lines, as required by the calibration system introduced in [III].

Fig. 3 shows the comparison results, where the upper curve is the error measure of the metric calibration and the lower curve is the error measure of the non-metric calibration of a unified camera model, which are exhibited as functions of the standard deviation. The error measure is given by the average distance on the retinal plane between the four image corners and the analytical projection of the four lateral incident vectors. This quality measure is assumed to be a significant indication of the calibration accuracy as it is extracted from the most critical position of the retinal plane, in terms of 3D calibration performance, and also because these points are not part of the calibration dataset.

Fig. 4 schematically depicts an apparatus 20 configured to perform the proposed method for estimating a unified projection model for a camera. The apparatus comprises a reception unit 21 and an operation unit 22. The reception unit 21 is configured to receive 10 an image captured by a camera. A non-metric calibration object is captured in the image. The operation unit 22 with reference to Fig. 1 is configured to extract 11 a plurality of feature points associated to the non-metric calibration object on the image, extract 12 a camera parameters vector using the plurality of feature points, define 13 an objective function of the camera parameters vector, and estimate 14 a unified projection model of the camera using the camera parameters vector and the objective function.

The foregoing illustrates the principles of the disclosure and it will thus be appreciated that those skilled in the art will be able to devise numerous alternative arrangements which, although not explicitly described herein, embody the principles and are within its and scope. It is therefore to be understood that numerous modifications can be made to the illustrative embodiments and that other arrangements can be devised without departing from the scope of the present principle as defined by the appended claims.

**REFERENCES**

[I] C. Geyer and K. Daniilidis, "A unifying theory for central panoramic systems and practical implications", ECCV 2000, LNCS 1843, pp.445-461.

[II] C. Mei and P. Rives, "Single view point omnidirectional camera calibration from planar grids," IEEE Conf. Robotics and Automation, pp.3945-3950, 2007

[III] K. Kanatani, "Calibration of ultrawide fisheye lens cameras by eigenvalue minimization", IEEE Transactions on Pattern Analysis and Machine Intelligence, 35(4): 813-822, 2003

[IV] H. Komagata, I. Ishii, A. Takahashi, D. Wakabayashi, and H. Imai, "A geometric calibration method of internal camera parameters for fish-eye lenses", IEICE Trans. Information and Systems, vol. J89-D, no. 1, pp. 64-73, 2006

[V] Y. Nakatsukasa. 2011. Algorithms and Perturbation Theory for Matrix Eigenvalue Problems and the Singular Value Decomposition. Ph.D. Dissertation. University of California at Davis, Davis, CA, USA.

[VI] D. C. Brown, "Decentering distortion of lenses", Photogrammetric Engineering, 32(3):444-462.

[VII] Omnidirectional calibration toolbox. http://www.robots.ox.ac.uk/~cmei/Toolbox.html

**Claims**

1. A method for estimating a unified projection model for a camera, comprising:

   - receiving (10) an image captured by the camera, a non-metric calibration object being captured in the image;
   - extracting (11) a plurality of feature points associated to the non-metric calibration object on the image;
   - extracting (12) a camera parameters vector using the plurality of feature points;
   - defining (13) an objective function of the camera parameters vector; and
   - estimating (14) a unified projection model of the camera using the camera parameters vector and the objective function.

2. The method of claim 1, wherein the camera parameters vector is represented by at least a part of:

   coordinates of principle points corresponding to an intersection of an optical axis with a retinal plane $(u_0, v_0)$, camera focal lengths $(\gamma_1, \gamma_2)$, a corresponding lifting parameter $(\xi)$, and n distortion parameters $\theta_{i, i=0,...,N-1}$, where N can be arbitrarily defined by the user.

3. The method of claim 1 or 2, wherein the objective function is defined as

$$J = \frac{J_1}{\gamma_1} + \frac{J_2}{\gamma_2} + \frac{J_3}{\gamma_3} \, ,$$

where

$$J_1 = \sum_{all\ \kappa} \lambda_{min}^{(\kappa)} \, ,$$

$$J_2 = \sum_{all\ \mathcal{G}} \mu_{min}^{(\mathcal{G})} \, ,$$

and

$$J_3 = \sum_{all\ orthogonal\ pairs\ \{\mathcal{G}_{\mathcal{G}}, \mathcal{G}'_{\mathcal{G}}\}} (I_{\mathcal{G}}, I_{\mathcal{G}'})^2$$

are error terms derived by enforcement of the collinearity, parallelism and orthogonality constraint, respectively, and $\gamma_i$, $i$ = 1, 2, 3 in the objection function are weights to balance magnitudes of the three terms.

4. The method of one of claims 1-3, wherein estimating the unified projection model of the camera includes calculating a minimization of a Jacobian matrix of the objective function.

5. The method of claim 4, wherein the minimization of the Jacobian matrix of the camera parameters vector is calculated using Eigenvalue Minimization.

6. The method of one of the preceding claims, wherein the non-metric calibration object is one of stripe pattern and color-coded calibration object.

7. An apparatus for estimating a unified projection model for a camera, comprising:

  - a reception unit (21) configured to receive an image captured by the camera, a non-metric calibration object being captured in the image; and
  - an operation unit (22) configured to
  extract (11) a plurality of feature points associated to the non-metric calibration object on the image,
  extract (12) a camera parameters vector using the plurality of feature points,
  define (13) an objective function of the camera parameters vector, and
  estimate (14) a unified projection model of the camera using the camera parameters vector and the objective function.

8. The apparatus of claim 7, wherein the camera parameters vector is represented by at least a part of: coordinates of principle points which is an intersection of an optical axis with a retinal plane ($u_0$, $v_0$), camera focal lengths ($\gamma_1$, $\gamma_2$), a corresponding lifting parameter ($\xi$), and n distortion parameters $\theta_{i, i=0,...,N-1}$, where the apparatus is configured such that N is arbitrarily definable by a user.

9. The apparatus of claim 7 or 8, wherein the objective function is defined as

$$J = \frac{J_1}{\gamma_1} + \frac{J_2}{\gamma_2} + \frac{J_3}{\gamma_3} \; ,$$

where

$$J_1 = \sum_{all \; \kappa} \lambda_{min}^{(\kappa)} \; ,$$

$$J_2 = \sum_{all \; \mathcal{G}} \mu_{min}^{(\mathcal{G})} \; ,$$

and

$$J_3 = \sum_{all \; orthogonal \; pairs \; \left\{ \mathcal{G}_\mathcal{G}, \mathcal{G}_\mathcal{G}' \right\}} (I_\mathcal{G}, I_{\mathcal{G}'})^2$$

are error terms derived by enforcement of the collinearity, parallelism and orthogonality constraint respectively, and $\gamma_i$, $i$ = 1, 2, 3 in the objection function are weights to balance magnitudes of the three terms.

10. The apparatus of one of claims 7-9, wherein the operation unit (22) estimates the unified projection model of the camera by calculating a minimization of a Jacobian matrix of the objective function.

11. A computer readable storage medium having stored therein instructions for estimating a unified projection model for a camera, which when executed by a computer, causes the computer to:

   - receive an image captured by the camera, a non-metric calibration object being captured in the image;
   - extract a plurality of feature points associated to the non-metric calibration object on the image;
   - extract a camera parameters vector using the plurality of feature points;
   - define an objective function of the camera parameters vector; and
   - estimate a unified projection model of the camera using the camera parameters vector and the objective function.

12. An apparatus comprising the computer readable storage medium of claim 11, **characterized by**: a visual scene defined with a calibration checkerboard that comprises grid points, and a virtual camera defined according to the proposed unified projection model.

13. The apparatus of claim 12, **characterized by** having at least $9 \times 11$ grid points.

14. The apparatus of claim 12, **characterized by** the apparatus being configured to acquire a calibration dataset simulated by analytical projection of a dataset of the grid points on ten calibration views under different orientations.

15. The apparatus of claim 14, **characterized by** that image projections being corrupted with a progressive white Gaussian noise with standard deviation ranging in the interval of [0-1.6] pixels, wherein the dataset comprised of the noisy grid point projection is used to run the metric and the non-metric calibration.

```
┌─────────────────────────────┐
│      Receiving image        │────── 10
│    captured by a camera     │
└─────────────────────────────┘
               │
               ▼
┌─────────────────────────────┐
│    Extracting feature points│────── 11
│   associated to a non-metric│
│   calibration object on the │
│            image            │
└─────────────────────────────┘
               │
               ▼
┌─────────────────────────────┐
│  Extracting a camera        │────── 12
│  parameters vector using    │
│  the feature points         │
└─────────────────────────────┘
               │
               ▼
┌─────────────────────────────┐
│        Defining an          │────── 13
│   objective function of the │
│   camera parameters vector  │
└─────────────────────────────┘
               │
               ▼
┌─────────────────────────────┐
│  Estimating a unified       │────── 14
│  projection model of the    │
│  camera using the camera    │
│  parameters vector and      │
│  the objective function     │
└─────────────────────────────┘
```

## Fig. 1

```
┌─────────────────────────────────────────────┐
│                                              │────── 20
│  ┌──────────────┐      ┌──────────────┐      │
│  │ Reception unit│──▶   │Operation unit│      │
│  └──────────────┘      └──────────────┘      │
│          │                     │             │
└──────────┼─────────────────────┼─────────────┘
           21                    22
```

## Fig. 4

**Fig. 2**

**Fig. 3**

Europäisches
Patentamt

European
Patent Office

Office européen
des brevets

## EUROPEAN SEARCH REPORT

Application Number

EP 15 30 6317

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUQING DUAN ET AL: "Calibrating central catadioptric cameras based on spatial line projection constraint", SYSTEMS MAN AND CYBERNETICS (SMC), 2010 IEEE INTERNATIONAL CONFERENCE ON, IEEE, PISCATAWAY, NJ, USA, 10 October 2010 (2010-10-10), pages 2088-2093, XP031805658, ISBN: 978-1-4244-6586-6 | 1,4-7, 10-15 | INV. G06T7/00 |
| Y | * the whole document * | 1,2,4-8, 10,11 | |
| Y,D | MEI C ET AL: "Single View Point Omnidirectional Camera Calibration from Planar Grids", 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10 April 2007 (2007-04-10), pages 3945-3950, XP031389409, ISBN: 978-1-4244-0601-2 * abstract * * sections I-IV * | 1-11 | |
| Y,D | KENICHI KANATANI: "Calibration of Ultrawide Fisheye Lens Cameras by Eigenvalue Minimization", IEEE TRANSACTIONS ON PATTERN ANALYSIS AND MACHINE INTELLIGENCE, IEEE COMPUTER SOCIETY, USA, vol. 35, no. 4, 1 April 2013 (2013-04-01), pages 813-822, XP011494055, ISSN: 0162-8828, DOI: 10.1109/TPAMI.2012.146 * abstract * * sections 4-7 * | 1-11 | |

TECHNICAL FIELDS SEARCHED (IPC)

G06T

-/--

The present search report has been drawn up for all claims

| Place of search | Date of completion of the search | Examiner |
|---|---|---|
| Munich | 7 March 2016 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 15 30 6317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Christopher Geyer ET AL: "A Unifying Theory for Central Panoramic Systems and Practical Implications" In: "Correct System Design", 1 January 2000 (2000-01-01), Springer International Publishing, Cham 032548, XP055253772, ISSN: 0302-9743 ISBN: 978-3-642-28871-5 vol. 1843, pages 445-461, DOI: 10.1007/3-540-45053-X_29, * the whole document * | 1-15 | |
| A | BARRETO J P ET AL: "Issues on the geometry of central catadioptric image formation", PROCEEDINGS 2001 IEEE CONFERENCE ON COMPUTER VISION AND PATTERN RECOGNITION. CVPR 2001. KAUAI, HAWAII, DEC. 8 - 14, 2001; [PROCEEDINGS OF THE IEEE COMPUTER CONFERENCE ON COMPUTER VISION AND PATTERN RECOGNITION], LOS ALAMITOS, CA, IEEE COMP. SOC, US, vol. 2, 8 December 2001 (2001-12-08), pages 422-427, XP010584153, ISBN: 978-0-7695-1272-3 * the whole document * | 1-15 | **TECHNICAL FIELDS SEARCHED    (IPC)** |

The present search report has been drawn up for all claims

| Place of search | Date of completion of the search | Examiner |
|---|---|---|
| Munich | 7 March 2016 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 15150966 A

**Non-patent literature cited in the description**

- **C. GEYER ; K. DANIILIDIS.** A unifying theory for central panoramic systems and practical implications. *ECCV,* 2000, vol. 1843, 445-461
- **C. MEI ; P. RIVES.** Single view point omnidirectional camera calibration from planar grids. *IEEE Conf. Robotics and Automation,* 2007, 3945-3950
- **K. KANATANI.** Calibration of ultrawide fisheye lens cameras by eigenvalue minimization. *IEEE Transactions on Pattern Analysis and Machine Intelligence,* 2003, vol. 35 (4), 813-822
- **H. KOMAGATA ; I. ISHII ; A. TAKAHASHI ; D. WAKABAYASHI ; H. IMAI.** A geometric calibration method of internal camera parameters for fish-eye lenses. *IEICE Trans. Information and Systems,* 2006, vol. J89 (1), 64-73
- **Y. NAKATSUKASA.** Algorithms and Perturbation Theory for Matrix Eigenvalue Problems and the Singular Value Decomposition. *Ph.D. Dissertation,* 2011
- **D. C. BROWN.** Decentering distortion of lenses. *Photogrammetric Engineering,* vol. 32 (3), 444-462